# EUROPÄISCHE PATENTSCHRIFT

(11) **EP 2 338 021 B1**
(45) Veröffentlichungstag und Bekanntmachung des Hinweises auf die Patenterteilung: **28.12.2016**
(21) Anmeldenummer: 09778681.8
(22) Anmeldetag: 23.09.2009
(51) Int. Cl.: F24J 2/42, F28D 20/02, F28D 20/00

(54) **VERFAHREN ZUM TRANSPORT VON WÄRME, TRANSPORTSYSTEM FÜR EINEN WÄRMETRÄGER SOWIE DESSEN VERWENDUNG**
METHOD FOR TRANSPORTING HEAT, TRANSPORT SYSTEM FOR A HEAT CARRIER AND THE USE THEREOF
PROCÉDÉ DE TRANSPORT DE CHALEUR, SYSTÈME DE TRANSPORT POUR UN CALOPORTEUR, AINSI QUE SON UTILISATION

(30) Priorität: 24.09.2008 DE 102008048655
(43) Veröffentlichungstag der Anmeldung: 29.06.2011
(73) Patentinhaber: Fraunhofer-Gesellschaft zur Förderung der angewandten Forschung e.V., 80686 München (DE)
(72) Erfinder: HERMANN, Michael, 79174 Heuweiler (DE); GSCHWANDER, Stefan, 79194 Gundelfingen (DE)
(74) Vertreter: Pfenning, Meinig & Partner mbB
(86) Internationale Anmeldenummer: PCT/EP2009/006881
(87) Internationale Veröffentlichungsnummer: WO 2010/034482

(56) Entgegenhaltungen:
- WO-A1-2006/015815
- WO-A2-2004/097320
- DE-A1- 3 034 608
- GB-A- 2 084 311
- US-A- 4 136 668
- US-A- 4 273 101

## Beschreibung

Die Erfindung betrifft ein Transportsystem für einen Wärmeträger, das mindestens ein Transportnetz, mindestens einen Wärmeträger sowie mindestens eine Antriebsvorrichtung für den Wärmeträger aufweist. Ebenso betrifft die Erfindung ein Verfahren zum Transport von Wärme unter Verwendung dieses Transportsystems. Verwendung findet das erfindungsgemäße Transportsystem beispielsweise für den Transport von Wärme in Solaranlagen.

Stand der Technik im Bereich des Wärmetransportes sind auf Flüssigkeiten oder Gasen basierende Leitungssysteme. Hierbei wird ein Wärmeträgerfluid mit Hilfe von Rohrleitungen kontinuierlich von einer oder mehreren Wärmequellen zu einer oder mehreren Wärmesenken transportiert. Das Wärmespeichermedium füllt hierbei das gesamte Rohrleitungsnetz aus und wird meist durch Pumpen umgewälzt. Im Falle von Netzen, die Wärme verteilen, besteht das Netz oft aus einer Wärmequelle, die Wärme auf einem bestimmten festgelegten Temperaturniveau liefert, und verteilten Wärmesenken, die die Wärme des Transport- und Speichermediums abführen und hierdurch seine Temperatur auf ein tieferes Niveau absenken. Bei Netzen, die zur Kühlung dienen, wird Wärme in einem Kreislauf meist von einer oder mehreren Wärmequellen zu einer zentralen Wärmesenke transportiert. Neu in der Entwicklung befinden sich mobile Wärmetransportanwendungen: Hier werden Standard-Container, wie sie im internationalen Handel heute Verwendung finden, mit einem Wärmespeichermaterial gefüllt und durch industrielle Abwärme beladen. LKW transportieren diese Container dann zur Wärmesenke bzw. einem Verbraucher. In einer Erweiterung dieses Ansatzes wurde auch vorgeschlagen, diese Container mit Zügen zwischen Wärmequelle und Wärmesenke zu transportieren. Dieses System, ob nun Transport per LKW oder per Zug, hat als Basis die bestehende Verkehrsinfrastruktur und funktioniert nach den Prinzipien des Gütertransports. Wärme kann mit diesem System nur in entsprechend großen Mengen wirtschaftlich transportiert werden. Eine Automatisierung des Transportes zwischen Wärmequelle und Senke ist im Stand der Technik bislang nicht realisiert. Ein solches Transportsystem gemäß dem Oberbegriff des Anspruchs 1 ist aus der Patentschrift US 4,273,101 bekannt.

Ausgehend hiervon war es Aufgabe der vorliegenden Erfindung, ein Transportsystem für Wärmeträger bereitzustellen, das einen wirtschaftlichen Transport von Wärme auch in geringen Mengen ermöglicht.

Diese Aufgabe wird durch das Transportsystem mit den Merkmalen des Anspruchs 1 und das Verfahren zum Transport von Wärme mit den Merkmalen des Anspruchs 10 gelöst. Die weiteren abhängigen Ansprüche zeigen vorteilhafte Weiterbildungen auf. In Anspruch 12 werden erfindungsgemäße Verwendungen genannt.

Erfindungsgemäß wird ein automatisiertes Transportsystem für einen Wärmeträger bereitgestellt, das mindestens ein Transportnetz, mindestens einen Wärmeträger sowie mindestens eine Antriebsvorrichtung für den Wärmeträger aufweist. Der Wärmeträger kann dabei durch Wärmeaufnahme an einer Wärmequelle und/oder Wärmeabgabe an einer Wärmesenke, die sich an definierten Punkten des Transportnetzes befinden, seinen thermodynamischen Zustand und/oder seine physikalischen und/oder chemischen Eigenschaften ändern. Der mindestens eine Wärmeträger ist dabei in mindestens einem Behälter eingekapselt.

Die Erfindung sieht dabei eine Automatisierung sowohl bei der Be- und Entladung als auch beim eigentlichen Transport der Behälter innerhalb des Transportnetzes vor. Hierzu zählt z.B. das "Finden des richtigen Weges" von einem Ausgangspunkt zu einem Endpunkt im Netz.

Grundlegend für die hier beschriebene Erfindung ist, dass die Funktion der Wärmespeicherung eines Materials von der Transportfunktion entkoppelt wird, d.h. dass im Gegensatz zu z.B. Warmwassernetzen die Transportfunktion und die Wärmespeicherfunktion unabhängig voneinander realisiert werden können. Während bei klassischen Kälte- oder Wärmenetzen der Wärmeträger nicht nur die Wärme, die transportiert werden soll, speichert, sondern auch durch die Rohre eines Netzes gepumpt wird, also auch durch sein Fließen direkt den Transport der Wärme übernimmt, hat bei der hier beschriebenen Erfindung das Wärmespeichermaterial nur noch die Funktion der reinen Wärmespeicherung. So spielt beispielsweise die Viskosität des Materials keine Rolle, da es nicht direkt gepumpt, sondern in einem Behälter verpackt transportiert wird. Die Trennung von Transportfunktion und Wärmespeicherfunktion erlaubt es, beliebige Materialien - vollkommen unabhängig von ihrem Aggregatzustand - zu transportieren. Damit wird es möglich, in ein und demselben Netz verschiedene Wärmespeichermaterialien unabhängig von ihrem jeweiligen Temperaturniveau gleichzeitig zu transportieren. Der Transport zwischen Wärmequelle und Wärmesenke wird durch ein vom Wärmespeichermaterial unabhängiges Transportsystem übernommen. Dies wird durch die bereits erwähnte Kapselung des Wärmespeichermaterials in Behältern, die durch ein Transportsystem automatisiert zwischen Wärmequellen und Wärmesenken befördert werden, erreicht.

Durch die Verpackung der Wärmespeichermaterialien in Behälter, die dann zum Transport dienen, wird es möglich, in einem Wärme- oder Kältenetz verschiedene Materialien zur Wärme- bzw. Kältespeicherung einzusetzen. Zusätzlich kann jeder Behälter Wärme auf einem Temperaturniveau transportieren, das unabhängig vom Temperaturniveau und/oder den Wärmespeichermaterialien anderer Behälter ist. Im Gegensatz zu dem oben erwähnten mobilen Wärmetransport mittels LKW oder Bahn benötigt das hier beschriebene System eine Infrastruktur, die neben dem Transportnetz auch Wärmeübergabestationen an jeder Wärmequelle bzw. -senke beinhaltet, bei der die Wärme dem Behälter automatisch zugeführt oder ihm entnommen wird, sobald er angebots- bzw. bedarfsgerecht verschickt oder gelagert werden soll bzw. sobald er beladen ankommt. Des Weiteren unterscheidet sich die Erfindung gegenüber dem Stand der Technik durch ihre Skalierbarkeit. So sind beispielsweise Überlandnetze ebenso vorstellbar wie Nahwärme- und -kältenetze in einem Wohngebiet oder gar die Verteilung der Wärme innerhalb eines Gebäudes. Der Austausch der Wärme geschieht vollständig automatisiert, und das System ist vom Milliliter- bis in den Tonnenmaßstab skalierbar.

Da das Temperaturniveau in jedem Behälter durch Wahl des Wärmespeichermaterials individuell eingestellt werden kann, kann mit ein und demselben Transportsystem Wärme in einem sehr breiten Temperaturbereich transportiert werden, indem z.B. gleichzeitig in einem Netz Behälter für Tieftemperaturen und Behälter für Hochtemperaturen transportiert werden.

Hinsichtlich der Antriebsvorrichtung für den eingekapselten Wärmeträger stehen verschiedene Varianten zur Auswahl. Eine erste Variante sieht vor, dass das Transportsystem wie ein klassisches Rohrpostsystem konzipiert ist, d.h. bei dem das Transportnetz als Röhrensystem aufgebaut ist und der Transport der Behälter in den Röhren aufgrund von Luftdruckunterschieden in der Röhre erfolgt. In diesem Fall wird als Antriebsvorrichtung eine Druck- und/oder Saugluftvorrichtung eingesetzt.

Eine zweite Variante sieht vor, dass das Transportsystem auf dem Prinzip der Magnetschwebetechnik basiert, wofür dann entsprechende elektromagnetische Antriebsvorrichtungen erforderlich sind.

Eine dritte Variante sieht vor, dass das Transportsystem entsprechend einem Schienenfahrzeug konzipiert ist, d.h. ein mechanisches System, bei dem die Behälter über Schienen geführt werden und z.B. durch eine elektrische Antriebsvorrichtung vorangetrieben werden.

Ebenso ist es auch möglich, dass die zuvor beschriebenen Varianten miteinander kombiniert werden.

Eine bevorzugte Variante sieht vor, dass die Behälter im Wesentlichen zylinder- oder kugelförmig sind, so dass ihr Transport nach dem Prinzip einer Rohrpost und/oder durch Rollen erfolgen kann.

Als Wärmeträger kommen alle hierfür gängigen Stoffe in Betracht. Hierzu zählen beispielsweise Phasenwechselmaterialien (PCM), die z.B. durch Wärmeaufnahme am Ort der Wärmequelle schmelzen und beim Erstarren am Ort der Wärmesenke die latent gespeicherte Wärme wieder abgeben. Ebenso ist es möglich, dass Phasenwechselflüssigkeiten, z.B. in Form von Emulsionen oder Suspensionen aus einem Trägerfluid und einem Phasenwechselmaterial, in die Behälter gefüllt werden. Zum Zwecke des Wärmeaustausches wird die Phasenwechselflüssigkeit dann in einem externen Wärmeüberträger dem Behälter entnommen.

Als Wärmeträger können auch Sorbentien, z.B. Zeolithe, Silikagele, Aktivkohle, Metalloxid-Verbindungen (Metal oxide framework MOF), Alumino-Phosphate (AlPO), Siliko-Aluminophosphate (SAPO), Schichtsilikate und deren Mischungen eingesetzt werden. In diesem Fall gibt dann der Wärmeträger durch Wärmeaufnahme am Ort der Wärmequelle in ihm enthaltendes Fluid durch Desorption ab. Am Ort der Wärmesenke wird dann die während der Desorption zugeführte Wärme durch Aufnahme von Fluid (Adsorption) wieder abgegeben. So ist es beispielsweise möglich, dass das während der Desorption in der Dampfphase abgegebene Fluid über eine semi-permeable Membran, die für Dampf durchlässig, für flüssiges Fluid aber undurchlässig ist, in einen separaten Bereich des Behälters geleitet wird, wo es kondensieren und zum Zwecke der Wärmeabgabe durch Adsorption wieder automatisch entnommen werden kann.

Eine weitere erfindungsgemäße Variante sieht vor, dass die Wärme, die in das im Behälter befindliche Material eingekoppelt wird, dazu dient, physikalische Prozesse oder chemische Reaktionen in Gang zu setzen, die das Material bzw. die im Behälter befindlichen Materialien in einer gewünschten Art und Weise verändern. Im Falle der Wärmetransportaufgabe kann jeder einzelne Behälter ein an die jeweilige Wärmetransportaufgabe angepasstes Material enthalten. Dieses System ermöglicht es, z.B. Wärme von einer Wärmequelle A, die auf einem sehr hohen Temperaturniveau vorliegt (z.B. 150 °C), zu einer Wärmesenke B zu transportieren, die die Wärme bis zu einem Temperaturniveau von z.B. 100 °C nutzen kann. Gleichzeitig kann Wärme von einer Wärmequelle C, die z.B. auf 80 °C vorliegt, an eine Wärmesenke D geliefert werden, die die Wärme auch nur auf diesem tieferen Temperaturniveau braucht. Zusätzlich ist es möglich, dass die Wärmesenke B, wenn sie den Wärmebehälter von der Wärmequelle A bis auf 100 °C entladen hat, diesen weiter an die Wärmesenke D schicken kann und so die vorhandene Wärme wesentlich effizienter genutzt wird. Das Prinzip, Wärme je nach Temperaturniveau in einem Netz zu adressieren, steigert die exergetische Effizienz und trägt zu einer drastischen Verringerung der CO₂-Emissionen bei.

Eine weitere Variante sieht vor, dass der Wärmeträger eine Substanz ist, die temperaturinduziert und reversibel endotherm und/oder exotherm reaktiv ist.

Hierbei ist es bevorzugt, dass die Behälter mit einer oder mehreren Substanzen gefüllt sind, die durch eine endotherme chemische Reaktion reversibel zu einer oder mehreren Substanzen reagieren, die zum Zwecke der Wärmeabgabe gezielt wieder zur exothermen Rückreaktion gebracht werden können.

Die durch die endotherme Reaktion entstehenden Substanzen werden vorzugsweise im Behälter automatisch voneinander getrennt und zur Induktion der exothermen Reaktion gezielt wieder zusammen geführt. Vorzugsweise wird die exotherme Reaktion durch das Erreichen einer bestimmten Temperatur induziert.

Es ist weiter bevorzugt, dass der mindestens eine Behälter eine wärmeleitende Innenstruktur aufweist, die eine Wärmeleitung zwischen Wärmeträger und Wärmequelle bzw. Wärmesenke ermöglicht. Diese Innenstruktur kann den Bereich der Wärmeein- bzw. Wärmeauskopplung mit dem in ihm befindlichen mindestens einen Wärmeträger verbinden.

Eine weitere bevorzugte Variante sieht vor, dass der mindestens eine Behälter eine innere Kanalstruktur aufweist, die von dem Wärmeträger durchströmt werden kann. Eine weitere bevorzugte Variante sieht vor, dass der Wärmetransport mittels mindestens einem Wärmerohr (sog. Heat-pipe) erfolgt.

Die Behälter können ebenso Vorrichtungen zur Reduzierung thermischer Verluste aufweisen. Hierzu zählt beispielsweise eine doppelwandige Ausgestaltung der Behälterwand nach dem Dewar-Prinzip.

Eine weitere bevorzugte Ausführungsform sieht vor, dass das Transportsystem ein thermisch isoliertes Magazin als Wärmespeicher zur Aufbewahrung bzw. Zwischenlagerung der gekapselten Wärmeträger aufweist. Dabei ist es auch möglich, dass ein derart thermisch isoliertes Magazin so ausgestaltet ist, dass es selbst als Behälter in dem Transportsystem eingesetzt werden kann. Eine weitere Möglichkeit besteht darin, dass das Magazin mehrere Zellen aufweist, die revolverartig um die Zylinderachse rotieren können, so dass eine Verteilung der Kapseln aus einzelnen Zellen in das Transportnetz, z.B. in Form von Röhren, erfolgen kann.

Eine weitere bevorzugte Variante sieht vor, dass das thermisch isolierte Magazin derart gestaltet ist, dass Behälter oben eingefüllt und unten entnommen werden können und ein automatisches Nachrücken der im Magazin befindlichen Behälter alleine durch die Schwerkraft, z.B. Rollen auf geneigten Bahnen, erfolgt.

Die Behälter können vorzugsweise zum Zwecke der Wärmeaufnahme oder -abgabe flächig neben- oder übereinander angeordnet sein. Auf diese Weise sind Konstruktionen für Solarkollektoren, z.B. Dachinstallation, Fassadeninstallation oder als Fensterkollektor, ebenso wie Heiz- oder Kühldecken, Kühlwände und Kühlböden realisierbar.

Eine weitere Variante sieht vor, dass das Transportnetz aus Röhren aufgebaut ist, wobei die Röhren im Bereich der Wärmequelle für Solarstrahlung optisch transparent sind und in der Brennlinie eines strahlungskonzentrierenden Systems positioniert sind, wobei die Behälter zumindest bereichsweise ein die Solarstrahlung absorbierendes Material oder eine Solarstrahlung absorbierende Beschichtung, insbesondere eine spektralselektive Beschichtung, aufweisen. Beispielsweise können die Behälter nach dem Prinzip eines Dewar-Gefäßes doppelwandig gestaltet sein, wobei mindestens die äußere Wand aus einem für Solarstrahlung transparenten Material, vorzugsweise aus Glas besteht, während die innere Wand mit einer Absorberbeschichtung versehen ist und der Bereich zwischen den Wänden zum Zwecke der Reduzierung thermischer Verlust evakuiert oder mit einem Edelgas gefüllt ist.

Erfindungsgemäß wird ebenso ein Verfahren zum Transport von Wärme unter Verwendung des zuvor beschriebenen Transportsystems bereitgestellt, bei dem der mindestens eine Wärmeträger in mindestens einem Behälter eingekapselt wird, die Behälter mit Hilfe der Antriebsvorrichtung durch das Netz transportiert werden, wobei an definierten Punkten des Netzes eine Wärmeaufnahme oder Wärmeabgabe erfolgt, wodurch der mindestens eine Wärmeträger seinen thermodynamischen Zustand und/oder seine physikalischen und/oder chemischen Eigenschaften ändert.

Hinsichtlich der Wärmeaufnahme bzw. Wärmeabgabe bestehen verschiedene erfindungsgemäße Varianten. Nach einer ersten Variante wird die Wärme berührungsfrei zwischen Wärmequelle bzw. Wärmesenke und Behälterwand mittels Strahlung ein- bzw. ausgekoppelt. Eine zweite Variante sieht vor, dass die Wärme durch Berührung zwischen Wärmequelle bzw. Wärmesenke und Behälterwand über Konduktion erfolgt. Bei einer dritten Variante erfolgt die Kopplung mittels eines flüssigen oder gasförmigen Fluids zwischen Wärmequelle bzw. Wärmesenke und Behälterwand über Konvektion.

Verwendung findet das Transportsystem in Wärme- und Kältenetzen oder auch für den Transport von Wärme in einer Solaranlage, sowohl bei rein thermischer Nutzung, als auch bei Stromerzeugung im solarthermischen Kraftwerk.

Da mit dem hier beschriebenen Wärmetransportsystem jede Wärmequelle unabhängig von den anderen Wärme einspeisen kann und jeder Verbraucher von jedem Wärmeanbieter Wärme beziehen kann, bietet ein solches Netz den idealen Handelsplatz für Wärme. In ein und demselben Netz kann solare Wärme genauso angeboten werden wie Abwärme aus industriellen Prozessen. Preise entstehen dann, wie an der Börse, durch Angebot und Nachfrage. So kann auch der Eigentümer einer solarthermischen Kleinanlage auf seinem Privatwohnhaus im Sommer seine Überschusswärme in das Netz einspeisen. Damit können dann industrielle Prozesse oder z.B. auch das örtliche Schwimmbad beheizt werden. Bei sehr vielen Teilnehmern eines solchen Wärmetransportnetzes sind auch spezielle Verteilapparaturen einzusetzen. Hier kommen alle z.B. bereits aus Rohrpostsystemen bekannten Möglichkeiten in Frage. Zusätzlich sind aber auch neue Ansätze denkbar, die die Verbindung verschiedener Teilbereiche eines solchen Netzes herstellen - z.B. die Verbindung eines Hauptnetzes mit verschiedenen Subnetzen. Eine solche Apparatur könnte z.B. als Trommel bzw. Revolver ausgeführt sein, die/der ein oder mehrere Behälter aus einem Rohr eines solchen Netzes aufnimmt und durch Drehen auf andere Rohre verteilt.

Da die Verteilung von Wärme in dem hier beschriebenen System auf der Verpackung eines Materials in einen Behälter basiert, ist die Anwendung des beschriebenen Wärmenetzes nicht nur auf die Verteilung von Wärme beschränkt. Die erwähnten Container müssen nicht zwangsläufig ein Wärmeträgermaterial enthalten, sie können auch jedes andere Produkt enthalten. So kann das Wärmenetz auch klassisch als Rohrpost verwendet werden und zur Versendung von Waren dienen. Das Netz ermöglicht es, dass jeder Teilnehmer direkt Waren mit jedem anderen Teilnehmer austauschen kann. Durch diesen Mehrfachnutzen in Kombination mit der Flexibilität hinsichtlich der Temperaturniveaus wird die Wirtschaftlichkeit des Systems gegenüber klassischen Nah- bzw. Fernwärmenetzen nach dem Stand der Technik deutlich erhöht.

Anhand der nachfolgenden Figuren soll der erfindungsgemäße Gegenstand näher erläutert werden, ohne diesen auf die hier gezeigten speziellen Ausführungsformen einzuschränken. Durch die vorliegende Erfindung sind somit auch beliebige Kombinationen zwischen den in den Figuren gezeigten Ausführungsformen umfasst.
Fig. 1 zeigt anhand einer schematischen Zeichnung eine erste Variante eines erfindungsgemäßen Wärmetransportsystems, das auf dem Rohrpost-Prinzip beruht.
Fig. 2 zeigt eine erste Variante eines erfindungsgemäßen Behälters, in dem ein Wärmeträger eingekapselt wird.
Fig. 3 zeigt einen erfindungsgemäßen Behälter gemäß Fig. 2 bei der Wärmeeinkopplung mittels Solarstrahlung.
Fig. 4 zeigt eine Variante eines erfindungsgemäßen Wärmetransportsystems in einem solarthermischen Kraftwerk.
Fig. 5 zeigt ein erfindungsgemäßes Magazin für die Zwischenlagerung der den Wärmeträger einkapselnden Behälter.
Fig. 6 zeigt ein erfindungsgemäßes zylindrisches Magazin, in dem die Behälter rotierend (nach dem Revolver-Prinzip) gelagert sind.

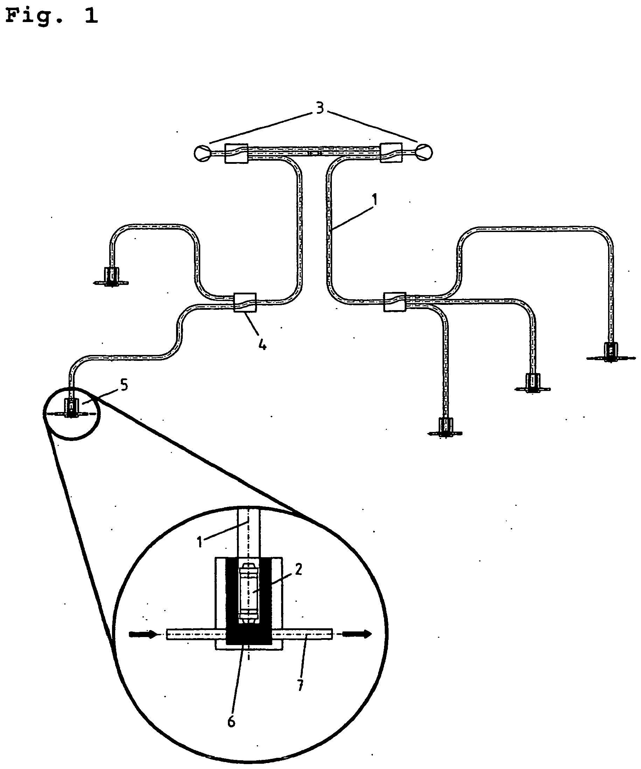

In Fig. 1 ist eine erste Variante eines automatisierten Wärmetransportsystems dargestellt, das nach dem klassischen Rohrpost-System aufgebaut ist. Dabei werden durch die Fahrrohre 1 Behälter 2, in denen der Wärmeträger eingekapselt ist, aufgrund von Luftdruckunterschieden transportiert. Die Luftdruckunterschiede können über Verdichter 3 aufgebaut werden. Die Röhren 1 können an definierten Punkten Weichen 4 aufweisen, wodurch Abzweigungen im Transportnetz eingebaut werden können. Der Transport der den Wärmeträger einkapselnden Behälter 2 erfolgt bis zu einer Übergabestation 5. Diese Übergabestation weist einen Wärmeüberträger 6 sowie eine Wärmeträgerleitung 7 auf, durch die der Transport der Wärme zum Endverbraucher erfolgt.

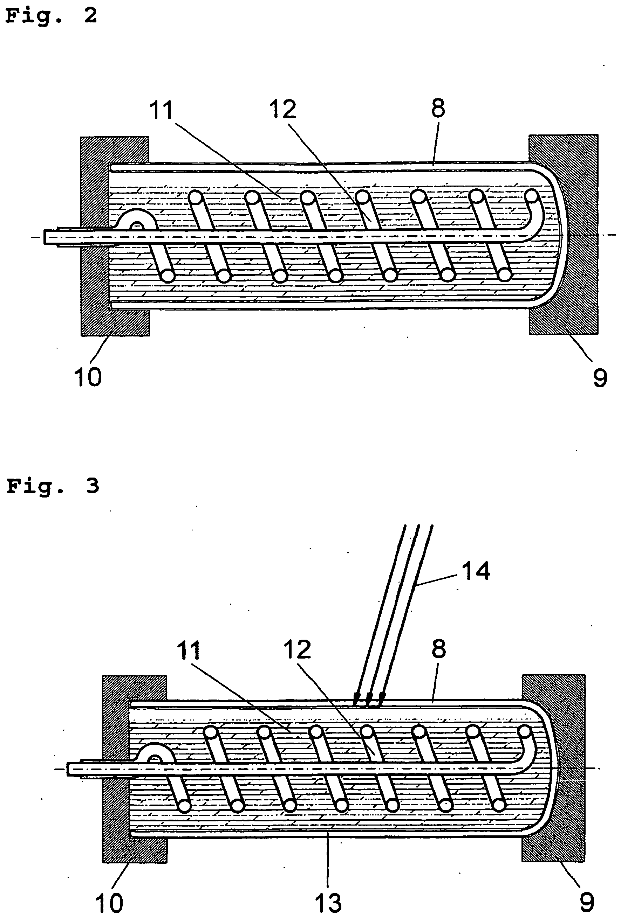

In Fig. 2 ist ein Behälter 8 dargestellt, in dem ein Wärmeträger eingekapselt ist. Der Behälter 8 weist dabei einen Aufbau nach dem DEWAR-Prinzip auf, d.h. es handelt sich um einen evakuierten doppelwandigen Behälter, vorzugsweise aus Glas. An dem geschlossenen Ende des Behälters 8 ist ein Puffer 9 angeordnet, während am offenen Ende ein weiterer Puffer 10, der die Funktion eines Deckels aufweist, angeordnet ist. Im Behälter 8 ist ein Wärmespeichermaterial 11, z.B. PCM, eingebracht. Weiterhin weist der Behälter Wärmetauscher 12 auf, die in der vorliegenden Variante spiralförmig aufgebaut sind. Diese dienen der Einund Auskopplung von Wärme in oder aus dem Behälter.

Fig. 3 zeigt den zuvor beschriebenen Behälter 8 bei einer Variante für die Wärmeeinkopplung. Zusätzlich zu den in Fig. 2 beschriebenen Bestandteilen weist der Behälter eine spektralselektive Beschichtung 13 auf, die auf der Innenseite des doppelwandigen Behälters 8 angeordnet ist. Durch einfallende Solarstrahlung 14 kann somit eine Erwärmung des Wärmespeichermaterials 11 im Behälter 8 erfolgen.

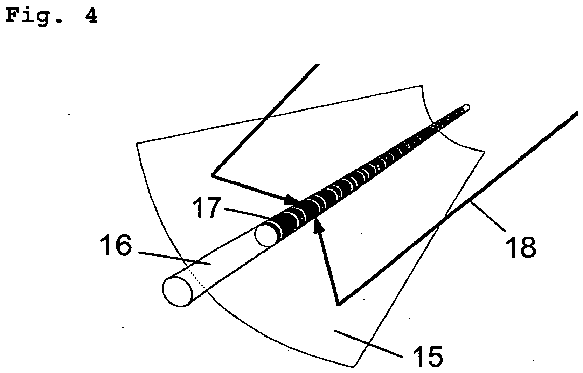

In Fig. 4 ist ein beispielhafter Einsatz eines erfindungsgemäßen Wärmetransportsystems in einem solarthermischen Kraftwerk dargestellt. Die Figur zeigt einen Reflektor 15 in Form eines Parabolspiegels sowie ein transparentes Fahrrohr 16, z.B. aus Glas, das in der Brennlinie des Parabolspiegels 15 angeordnet ist. Die Behälter 17 werden durch die Brennlinie transportiert und absorbieren hierbei die konzentrierte Solarstrahlung 18. Dabei wird das in den Behältern befindliche Wärmespeichermaterial erhitzt.

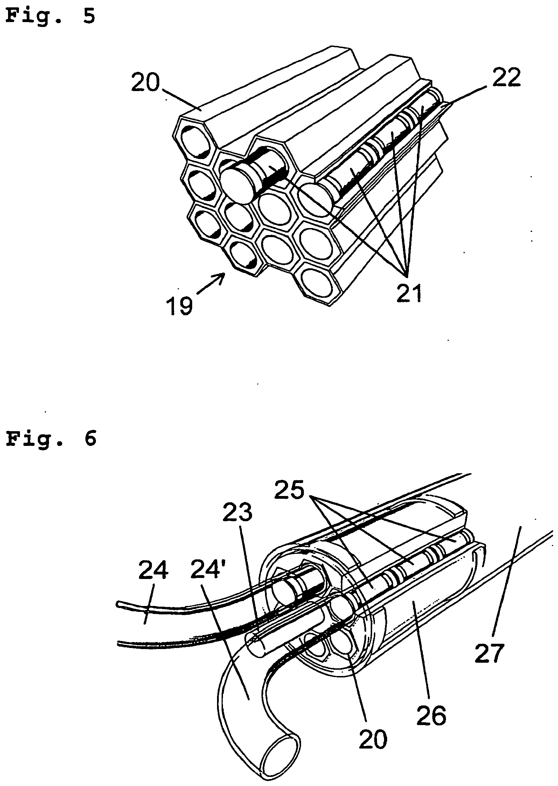

In Fig. 5 ist eine Variante für die Zwischenlagerung der den Wärmeträger enthaltenden Behälter dargestellt. Das hier dargestellte Magazin 19 enthält eine Vielzahl von Zellen 20 zur Aufnahme der Behälter 21. Jede einzelne Zelle 20 weist zusätzlich noch eine Wärmedämmung 22 an ihrer Innenseite auf.

In Fig. 6 ist eine Weiterentwicklung des Magazins gemäß Fig. 5 dargestellt. Hierbei sind die Zellen 20 zur Aufnahme der Behälter revolverartig um eine Drehachse 23 angeordnet. Gleichzeitig weist das System zwei Fahrrohre 24 und 24' auf, wobei durch Rotation die Zellen so positioniert werden, dass ein Transport der Behälter 25 in die jeweiligen Fahrrohre erfolgen kann. Sowohl Drehachse 23 und Zellen 20 sind in einem zylindrischen Magazin 26 angeordnet, das wiederum in einem Fahrrohr 27 transportierbar ist. Da das hier dargestellte Magazin auf dem Revolver-Prinzip basiert, können so mehrere Behälter aus einem Rohr des Transportnetzes aufgenommen und durch Drehen auf andere Rohre verteilt werden.

## Patentansprüche

1. Automatisiertes Transportsystem für einen Wärmeträger enthaltend mindestens ein Transportnetz,
mindestens einen Wärmeträger (11), der durch Wärmeaufnahme an einer Wärmequelle und/oder Wärmeabgabe an einer Wärmesenke an definierten Punkten des Netzes seinen thermodynamischen Zustand und/oder seine physikalischen und/oder chemischen Eigenschaften ändert, sowie
mindestens eine Antriebsvorrichtung für den Wärmeträger,
wobei der mindestens eine Wärmeträger (11) in mindestens einem Behälter (2, 8, 17, 21, 25) eingekapselt vorliegt, das Transportnetz aus Röhren (1, 24, 24') aufgebaut ist und die Antriebsvorrichtung eine Druck- und/oder Saugluftvorrichtung ist, **dadurch gekennzeichnet, dass** der mindestens eine Behälter (2, 8, 17, 21, 25) eine doppelwandige Ausgestaltung der Behälterwand nach dem Dewar-Prinzip zur Reduzierung thermischer Verluste aufweist.

2. Transportsystem nach einem der vorhergehenden Ansprüche, **dadurch gekennzeichnet, dass** der mindestens eine Behälter (2, 8, 17, 21, 25) im wesentlichen zylinder- oder kugelförmig ist.

3. Transportsystem nach einem der vorhergehenden Ansprüche, **dadurch gekennzeichnet, dass** der mindestens eine Wärmeträger (11) ausgewählt ist aus der Gruppe bestehend aus Wasser, Phasenwechselmaterialien sowie deren Emulsionen oder Suspensionen, Sorbentien, insbesondere Zeolithe, Silikagele, Aktivkohle, Metalloxid-Verbindungen, Aluminophosphate, Siliko-Aluminophosphate, Schichtsilikate und deren Mischungen.

4. Transportsystem nach einem der vorhergehenden Ansprüche, **dadurch gekennzeichnet, dass** der Wärmeträger (11) eine Substanz ist, die temperaturinduziert und reversibel endotherm und/oder exotherm reaktiv ist.

5. Transportsystem nach einem der vorhergehenden Ansprüche, **dadurch gekennzeichnet, dass** der mindestens eine Behälter (2, 8, 17, 21, 25) eine wärmeleitende Innenstruktur aufweist, die eine Wärmeleitung zwischen Wärmeträger und Wärmequelle bzw. Wärmesenke ermöglicht.

6. Transportsystem nach einem der vorhergehenden Ansprüche, **dadurch gekennzeichnet, dass** der mindestens eine Behälter (2, 8, 17, 21, 25) eine innere Kanalstruktur aufweist, die von dem Wärmeträger durchströmt werden kann.

7. Transportsystem nach einem der vorhergehenden Ansprüche, **dadurch gekennzeichnet, dass** der mindestens eine Behälter (2, 8, 17, 21, 25) mindestens ein Wärmerohr (12) zur Ein- oder Auskopplung von Wärme aufweist.

8. Transportsystem nach einem der vorhergehenden Ansprüche, **dadurch gekennzeichnet, dass** das Transportsystem ein thermisch isoliertes Magazin (19, 26) als Wärmespeicher zur Aufbewahrung der gekapselten Wärmeträger (11) aufweist.

9. Transportsystem nach Anspruch 1, **dadurch gekennzeichnet, dass** die Röhren (1, 24, 24') im Bereich der Wärmequelle für Solarstrahlung (14, 18) optisch transparent sind und in der Brennlinie eines strahlungskonzentrierenden Systems (15) positioniert sind, wobei die Behälter (2,8, 17, 21, 25) zumindest bereichsweise ein die Solarstrahlung (14, 18) absorbierendes Material oder eine Solarstrahlung absorbierende Beschichtung (13) aufweisen.

10. Verfahren zum Transport von Wärme unter Verwendung des Transportsystems nach einem der vorhergehenden Ansprüche, bei dem der mindestens eine Wärmeträger (11) in mindestens einem Behälter (2, 8, 17, 21) eingekapselt wird, der mindestens eine Behälter (2, 8, 17, 21, 25) mit Hilfe der Antriebsvorrichtung durch das Netz transportiert wird, wobei an definierten Punkten (5, 15) des Netzes eine Wärmeaufnahme oder Wärmeabgabe erfolgt, wodurch der mindestens eine Wärmeträger (11) seinen thermodynamischen Zustand und/oder seine physikalischen und/oder chemischen Eigenschaften ändert.

11. Verfahren nach Anspruch 10, **dadurch gekennzeichnet, dass** die Wärmeaufnahme bzw. Wärmeabgabe zwischen Wärmequelle bzw. Wärmesenke und Wärmeträger berührungsfrei über Strahlung, mittels Konduktion oder Konvektion erfolgt.

12. Verwendung eines Transportsystems nach einem der Ansprüche 1 bis 9 für den Transport von Wärme in Wärme- und Kältenetzen, in Solaranlagen und in solarthermischen Kraftwerken.

## Claims

1. Automated transport system for a heat carrier comprising
at least one transport network,
at least one heat carrier which, by means of heat absorption at a heat source and/or heat discharge at a heat sink at defined points in the network, changes its thermodynamic state and/or its physical and/or chemical properties, and also
at least one drive device for the heat carrier,
wherein the at least one heat carrier is present encapsulated in at least one container, the transport network is constructed from pipes and the drive device is a compressed air and/or vacuum device, **characterized in that** the at least one container has, for reducing thermal losses, a double-walled configuration of the container wall according to the Dewar principle.

2. Transport system according to one of the preceding claims, **characterised in that** the at least one container is essentially cylindrical or spherical.

3. Transport system according to one of the preceding claims, **characterised in that** the at least one heat carrier is selected from the group consisting of water, phase-change materials and also emulsions or suspensions thereof, sorbents, in particular zeolites, silica gels, activated carbon, metal oxide compounds, aluminophosphates, silicoaluminophosphates, layer silicates and mixtures thereof.

4. Transport system according to one of the preceding claims, **characterised in that** the heat carrier is a substance which is reversibly endothermally and/or exothermally reactive as a result of temperature.

5. Transport system according to one of the preceding claims, **characterised in that** the at least one container has a heat-conducting inner structure which enables heat conduction between heat carrier and heat source or heat sink.

6. Transport system according to one of the preceding claims, **characterised in that** the at least one container has an inner channel structure through which the heat carrier can flow.

7. Transport system according to one of the preceding claims, **characterised in that** the at least one container has at least one heat pipe for coupling or discharge of heat.

8. Transport system according to one of the preceding claims, **characterised in that** the transport system has a thermally insulated magazine as heat store for storage of the encapsulated heat carriers.

9. Transport system according to claim 1, **characterised in that** the pipes are optically transparent for solar radiation in the region of the heat source and are positioned in the focal line of a radiation-concentrating system, the containers having, at least in regions, a material which absorbs solar radiation or a coating which absorbs solar radiation.

10. Method for transporting heat using the transport system according to one of the preceding claims, in which the at least one heat carrier is encapsulated in at least one container, the at least one container is transported through the network with the help of the drive device, heat absorption or heat discharge being effected at defined points of the network, as a result of which the at least one heat carrier changes its thermodynamic state and/or its physical and/or chemical properties.

11. Method according to claim 10, **characterised in that** the heat absorption or heat discharge between heat source or heat sink and heat carrier is effected without contact via radiation, by means of conduction or convection.

12. Use of a transport system according to one of the claims 1 to 9 for transporting heat in heating and cooling networks, in solar plants and in solar-thermal power stations.

## Revendications

1. Système de transport automatisé pour un caloporteur contenant
au moins un réseau de transport,
au moins un caloporteur (11) qui, par l'absorption de chaleur sur une source de chaleur et/ou par une distribution de chaleur sur un puits de chaleur dans des points définis du réseau, modifie son état thermodynamique et/ou ses caractéristiques physiques et/ou chimiques, ainsi que
au moins un dispositif d'entraînement pour le caloporteur,
le caloporteur (11) au moins au nombre de un étant présent sous une forme hermétiquement étanche dans au moins un réservoir (2, 8, 17, 21, 25), le réseau de transport étant constitué de tubes (1, 24, 24') et le dispositif d'entraînement étant un dispositif d'air sous pression et/ou d'air aspiré, **caractérisé en ce que** le réservoir (2, 8, 17, 21, 25) au moins au nombre de un présente une constitution à double paroi de la paroi de réservoir selon le principe Dewar en vue de la réduction des pertes thermiques.

2. Système de transport selon l'une des revendications précédentes, **caractérisé en ce que** le réservoir (2, 8, 17, 21, 25) au moins au nombre de un est essentiellement cylindrique ou sphérique.

3. Système de transport selon l'une des revendications précédentes, **caractérisé en ce que** le caloporteur (11) au moins au nombre de un est sélectionné dans le groupe comprenant l'eau, des matériaux à changement de phase ainsi que leurs émulsions ou suspensions, des adsorbants, en particulier des zéolithes, des gels de silice, du charbon actif, des composés d'oxydes métalliques, des aluminophosphates, des silico-aluminophosphates, des silicates en feuillets et leurs mélanges.

4. Système de transport selon l'une des revendications précédentes, **caractérisé en ce que** le caloporteur (11) est une substance qui est induite par la température et qui est réactive de manière endothermique et/ou exothermique de façon réversible.

5. Système de transport selon l'une des revendications précédentes, **caractérisé en ce que** le réservoir (2, 8, 17, 21, 25) au moins au nombre de un présente une structure interne conductrice de la chaleur qui permet une conduction de chaleur entre le caloporteur et la source de chaleur ou respectivement le puits de chaleur.

6. Système de transport selon l'une des revendications précédentes, **caractérisé en ce que** le réservoir (2, 8, 17, 21, 25) au moins au nombre de un présente une structure de canaux interne qui peut être parcourue par le flux du caloporteur.

7. Système de transport selon l'une des revendications précédentes, **caractérisé en ce que** le réservoir (2, 8, 17, 21, 25) au moins au nombre de un présente au moins un tube de chaleur (12) pour le couplage ou le découplage de chaleur.

8. Système de transport selon l'une des revendications précédentes, **caractérisé en ce que** le système de transport présente un magasin (19, 26) thermiquement isolé en tant qu'accumulateur de chaleur pour la conservation des caloporteurs (11) enfermés de façon étanche.

9. Système de transport selon la revendication 1, **caractérisé en ce que** les tubes (1, 24, 24') sont optiquement transparents au rayonnement solaire (14, 18) dans la zone de la source de chaleur et sont positionnés sur la ligne focale d'un système (15) concentrant le rayonnement, les réservoirs (2, 8, 17, 21, 25) présentant au moins par tronçons un matériau absorbant le rayonnement solaire (14, 18) ou un revêtement (13) absorbant le rayonnement solaire.

10. Procédé de transport de chaleur avec utilisation du système de transport selon l'une des revendications précédentes, dans lequel le caloporteur (11) au moins au nombre de un est enfermé de façon étanche dans au moins un réservoir (2, 8, 17, 21), le réservoir (2, 8, 17, 21, 25) est transporté à travers le réseau à l'aide du dispositif d'entraînement, une absorption de chaleur ou distribution de chaleur étant effectuée dans des points (5, 15) définis du réseau, à la suite de quoi le caloporteur (11) au moins au nombre de un modifie son état thermodynamique et/ou ses caractéristiques physiques et/ou chimiques.

11. Procédé selon la revendication 10, **caractérisé en ce que** l'absorption de chaleur ou respectivement la distribution de chaleur entre la source de chaleur ou respectivement le puits de chaleur et le caloporteur s'effectue sans contact par le biais du rayonnement, au moyen de la conduction ou de la convection.

12. Utilisation d'un système de transport selon l'une des revendications 1 à 9 pour le transport de chaleur dans des réseaux de chaleur et de froid, dans des installations solaires et dans des centrales solaires thermiques.
